Europäisches Patentamt

European Patent Office

Office européen des brevets

(19)

(11) **EP 1 356 335 B1**

(12) ## EUROPEAN PATENT SPECIFICATION

(45) Date of publication and mention
of the grant of the patent:
**25.08.2004 Bulletin 2004/35**

(21) Application number: **01978662.3**

(22) Date of filing: **01.11.2001**

(51) Int Cl.⁷: $G02B\ 23/26$

(86) International application number:
**PCT/GB2001/004852**

(87) International publication number:
**WO 2002/037160 (10.05.2002 Gazette 2002/19)**

(54) **AN APPARATUS FOR PROVIDING AN IMAGE OF A REMOTE OBJECT ACCESSIBLE ONLY THROUGH AN APERTURE OF FINITE DIAMETER**

GERÄT ZUR ERZEUGUNG EINES BILDES EINES ENTFERNTEN UND NUR DURCH EINE ÖFFNUNG ENDLICHEN DURCHMESSERS ZUGÄNGLICHEN OBJEKTES

APPAREIL PERMETTANT DE PRODUIRE UNE IMAGE D'UN OBJECT ELOIGNE UNIQUEMENT ACCESSIBLE PAR UNE OUVERTURE DE DIAMETRE FINI

(84) Designated Contracting States:
**DE FR GB**

(30) Priority: **02.11.2000 GB 0026842**

(43) Date of publication of application:
**29.10.2003 Bulletin 2003/44**

(73) Proprietor: **KEYMED
(MEDICAL & INDUSTRIAL EQUIPMENT) LIMITED**
**Southend-on-Sea Essex SS2 5QH (GB)**

(72) Inventor: **RAMSBOTTOM, Andrew**
**Westcliff-on-Sea, Essex SS0 9TH (GB)**

(74) Representative: **Merrifield, Sarah Elizabeth et al
Boult Wade Tennant
Verulam Gardens
70 Gray's Inn Road
London WC1X 8BT (GB)**

(56) References cited:
**US-A- 4 511 222      US-A- 5 689 365**
**US-A- 5 919 128**

EP 1 356 335 B1

Printed by Jouve, 75001 PARIS (FR)

## Description

This invention relates to the range of viewing scopes intended to provide an image of a remote object accessible only through an aperture of finite diameter. This includes, for example, borescopes, endoscopes, fibrescopes, and videoscopes.

Such instruments generally perform two basic optical functions. Firstly they transfer light for illumination purposes from the proximal to the distal end of the scope so as to illuminate the object being viewed. Secondly, they transfer an image of the same object from the distal to the proximal end where this may be viewed by the eye, or by means of an attached or integral camera. Depending on the type of scope there are a number of possible means of image transfer e.g. relay lenses; rod lenses, gradient index (e.g. Selfoc) lenses, flexible coherent fibre bundles, rigid or (semi-rigid) coherent fibre image conduit, CCD or CMOS chip in distal tip. In all of these types of instrument there is a requirement to transmit illumination to the object being viewed. This is usually accomplished by means of a glass fibre bundle consisting of many thousands of individual small diameter (< 100 micron) optical fibres packed tightly around the outside of the image transmitting system, see e.g. US-A-5 609 365. Often the mechanical arrangement consists of a 2-tube construction, whereby an inner tube of material is used to support and protect the image transmitting optical system. The illumination fibres are packed around this inner tube inside of an outer protective tube.

The quality (brightness, resolution, image size) of the image produced by the scope is determined by many design factors however it is generally the case that the larger the diameter of the image transmission system and the greater the amount of luminous flux transmitted by the system then the better is the image quality achievable in respect of either image size, brightness, resolution or some combination of these criteria. Clearly for a given external diameter of scope the amount of luminous flux transmitted by the system can be increased by increasing the number of illumination fibres, however this will necessarily reduce the diameter of the imaging optical system thereby tending to reduce the overall luminous flux transmitted from distal to proximal end. For any particular system design there will be an optimum ratio of external scope diameter to imaging system diameter which maximises the overall luminous flux transmitted to the image.

According to the present invention there is provided an apparatus for providing an image of a remote object accessible only through an aperture of finite diameter, the apparatus comprising an elongate body defining a main axis, an image relay means for relaying an image along the main axis from the distal end of the scope, and an annular light pipe surrounding the image relay means for transmitting light to the distal end of the scope to illuminate the object to be viewed; characterised in that at least one of the inner surface or the outer surface of the annular light pipe is surrounded by air.

The light pipe is essentially a homogeneous block of light transmitting material as opposed to a number of discrete fibres. Although the light pipe will generally have a one piece construction, it may be made up of a small number of homogeneous blocks optically coupled to one another.

The advantages in replacing the bundle of optical fibres with an annular light pipe are numerous.

The annular light pipe does not require an inner protective tube allowing it to occupy a proportionally greater part of the limited cross-section available.

Optical fibres necessarily consist of some dead space caused by gaps between individual fibres and the cladding around each fibre core. This is not the case with an annular light pipe which can therefore transmit more light flux than a fibre bundle of the same cross-sectional area.

The annular light pipe has the potential to carry more light flux than a fibre bundle of the same cross-sectional area since the numerical aperture is higher. This offers the potential to use light concentrating techniques to increase the amount of light coupled into the annular light pipe as mentioned below.

When an apparatus is assembled using a bundle of fibres, it is difficult to avoid damaging some of the individual fibres as they are packed tightly around the image relay means. This becomes a proportionally greater problem as the diameter of the apparatus is reduced.

An annular light pipe is easier to handle than a bundle of optical fibres thereby greatly facilitating the assembly process.

The ability of the annular light pipe to transmit light is dependent upon the efficiency of the total internal reflection within the annular light pipe. This, in turn, is dependent upon the difference in the refractive index of the annular light pipe and the surrounding medium. To achieve the required differential in refractive indices at least the inner surface or the outer surface of the annular light pipe is surrounded by air. Of course, the annular light pipe will have to be externally supported and also has to provide support internally for the image relay means. This can be achieved if the annular light pipe is provided internally and/or externally with a support which contacts the annular light pipe only at a number of discrete locations. The support material preferably has a lower refractive index than that of the annular light pipe. The support may, for example, be a powder distributed internally and/or externally of the annular light guide, or may be one or more strips of fibrous material wound internally and/or externally of the annular light pipe.

As an alternative to the air gap, one of the inner surface or the outer surface of the annular light pipe may be coated with a layer of material having a lower refractive index than the material of the annular light pipe.

In order to increase the amount of light being transmitted through the annular light pipe, the invention may make use of a light flux concentrator. This takes the form of a frusto-conical light pipe which is coaxial with the annular light pipe and has a central axial bore corresponding to the bore of the annular light pipe, the outer diameter of the frusto-conical light pipe decreasing towards the annular light pipe and being substantially equal to the outer diameter of the annular light pipe at the interface between the annular light pipe and the frusto-conical light pipe. This allows a greater amount of flux to be coupled into the annular light pipe.

The flux will, however, be distributed over a wider angular range. This is a well understood and fundamental limitation of such light concentrators and there is generally an inverse relationship between the spatial distribution and annular distribution achieved for given light flux through a frusto-conical light pipe. At the distal end, the light would be emitted from the annular light pipe over a correspondingly larger angular distribution. Depending on the field of view, this may or may not be desirable. If it is not desirable, the angular distribution can be reduced by providing a distal light guide adjacent to the distal end of the annular light pipe and having an outer diameter equal to the outer diameter of the annular light pipe, and an inner diameter at its proximal end which is equal to the inner diameter of the annular light pipe and which progressively decreases towards the distal end. This is feasible since the diameter of the image relay means immediately adjacent to the distal end is generally smaller than its diameter away from the distal end. This leaves some unused space at the distal end for the tapered distal light guide as described.

The invention is applicable to a lateral viewing apparatus in which light is emitted and the images received in a direction substantially 90° to the viewing direction. In this case, the annular light pipe is provided with a window through which the image is transmitted to the image relay means. In order to reduce the amount of astigmatism, the external surface of the annular light pipe at the window may be polished flat.

A further arrangement for a lateral viewing apparatus is provided by the light guide terminating at a face which is at substantially 45° to the main axis and is associated with a reflective coating.

Examples of apparatus constructed in accordance with the present invention will now be described with reference to the accompanying drawings, in which:

Figs. 1(a) and 1(b) are schematic axial section and end illustrations respectively of the technical principal, underlying the present invention;

Fig. 2(a) is a schematic cross-section of the present invention and Fig 2(b) is a similar view of the prior art for comparative purposes;

Fig. 3 is a schematic cross-section of an apparatus in accordance with the present invention;

Fig. 4(a) is a schematic cross-section through a portion of the apparatus showing a first way of supporting an annular light pipe and image relay means;

Fig. 4(b) is a view similar to Fig. 4(a) showing a second way of supporting the annular light pipe and image relay means;

Fig. 5 is a schematic cross-section similar to Fig. 3 of a further apparatus in accordance with the present invention having a light flux concentrator;

Fig. 6(a) is a schematic axial cross-section of a distal end of a further example of an apparatus in accordance with the present invention;

Fig. 6(b) is a cross-section through line (b)-(b) in Fig. 6(a);

Figs. 6(c) and 6(d) are views corresponding to Fig. 6(a) and 6(b) respectively showing a further example of an apparatus in accordance with the present invention;

Figs. 7(a) and 7(b) are views corresponding to Figs. 6(a) and 6(b) respectively showing a further example of an apparatus in accordance with the present invention; and

Figs. 7(c) and 7(d) are views corresponding to Figs. 6(a) and 6(b) respectively showing a further example of an apparatus in accordance with the present invention.

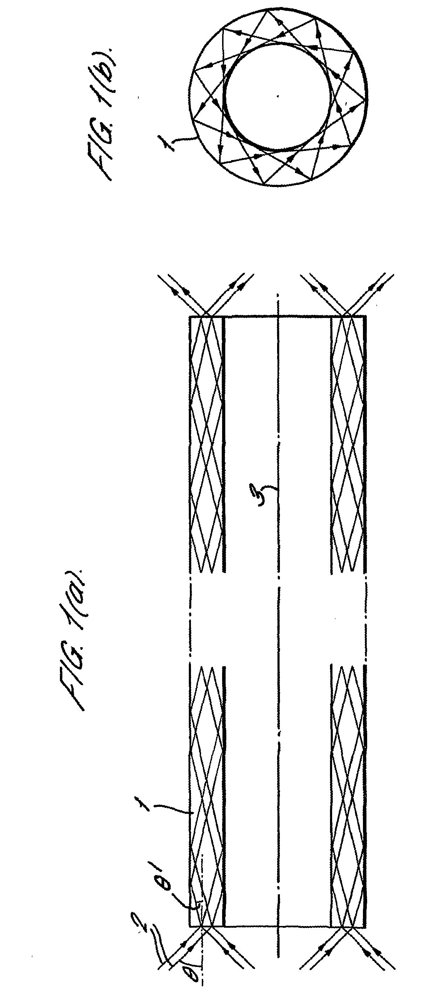

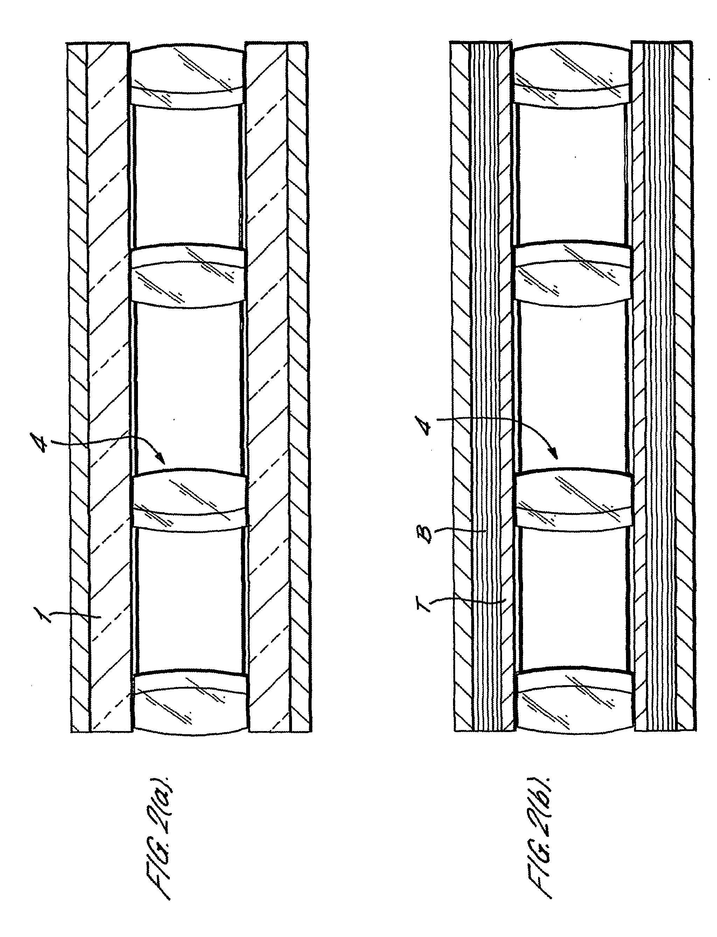

The invention can be applicable to any apparatus such as a borescope, endoscope, fibrescope or videoscope. Such an apparatus may either be of rigid construction or may be flexible. The invention essentially resides in replacing a conventional annular bundle of fibres in such a device with an annular light pipe 1. The technical principle governing the operation of the light pipe will now be described with reference to Figs. 1(a) and 1(b).

The elongate annular light pipe 1 is shown surrounded inside and out by air. Light 2 is coupled into the proximal end of the light pipe 1. This light is efficiently contained within the light pipe 1 by means of total internal reflection from the air-glass interfaces. Fig. 1(a) shows the typical path of meridional light rays (rays travelling within the plane of the drawing) incident on the end of the light pipe at an angle $\theta$ with respect to the direction of the pipe axis. It can be shown that any ray incident on the end of the pipe within an angle $\theta$ will be thus contained within the guide providing that $\sin\theta \leq \sqrt{n'^2 - 1}$ where n' is the refractive index of the pipe material. This implies that a material with a refractive index of 1.414 (√2) or greater will effectively contain meridional light rays incident from any acute angle to the pipe axis 3.

Figure 1(b) shows an end-on view of the pipe 1 and the path of a typical skew ray (a ray direction with both a meridional component and a component out of the plane of the drawing in Figure 1(a)). Clearly any skew ray that is incident at an angle to the pipe axis 3 of θ or less, where θ is defined by the equation above, will be incident on the pipe wall within the material at an angle to the surface normal greater than that of a meridional ray incident from a similar angle to the pipe axis 3. Hence any skew ray satisfying the above equation must also be contained efficiently within the pipe 1.

The quantity $\sin\theta$ $(=n' \sin\theta')$ in the above equation defines the maximum 'numerical aperture' of the light ray bundle. For most common optical materials (n>1.414) the maximum numerical aperture is greater than 1.

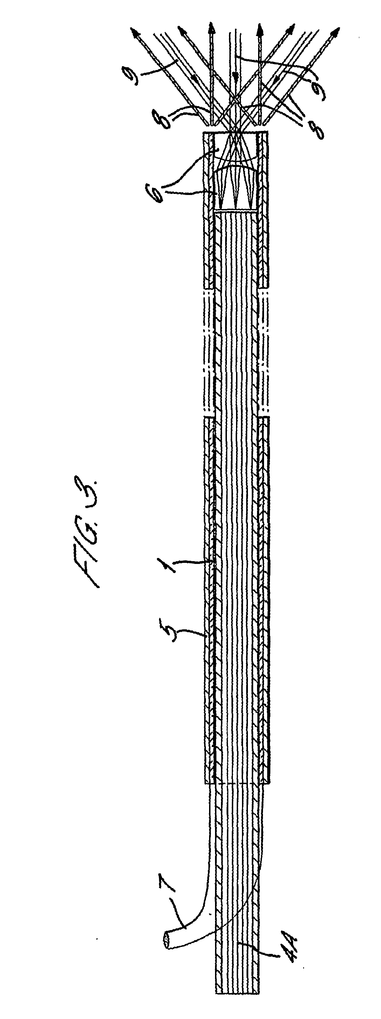

A cross-section illustrating schematically one possible design of a scope body containing a pipe 1 of this type is shown in Figure 2(a). For comparison a conventional borescope cross-section is shown of Figure 2(b). The pipe 1 is replacing both the conventional fibre bundle B and the inner protective lens tube T. The example shown in Figure 2 shows a conventional relay lens image transfer system 4 however the pipe 1 could just as well act as the protective enclosure for any of the other types of image transfer system referred to earlier.

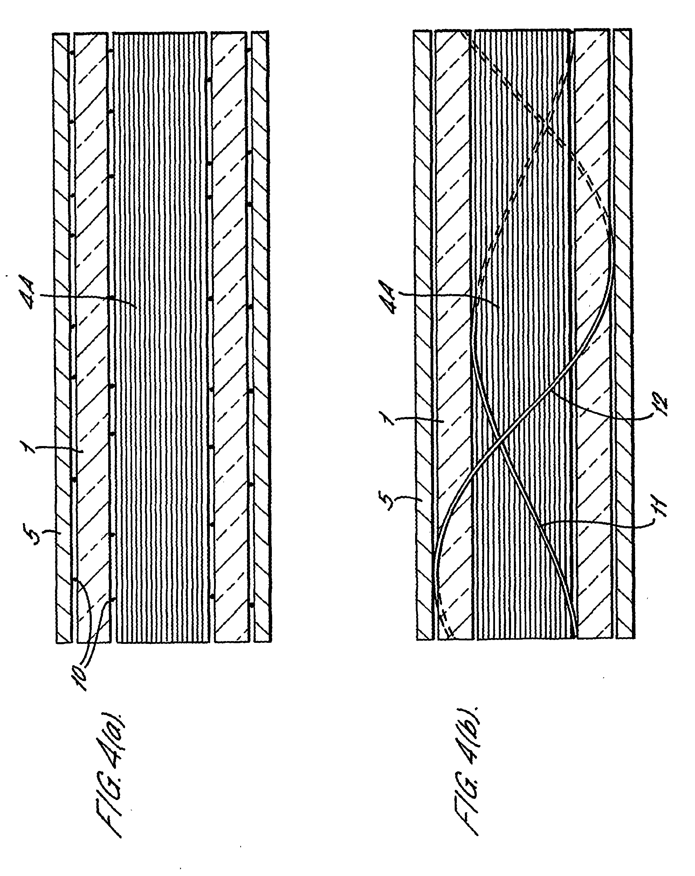

Figure 3 is a schematic showing the apparatus in greater detail than in Fig. 2(a). The apparatus is a device such as a borescope which is configured as a forward viewing device. The device comprises a hollow cylindrical main body 5 with imaging lenses 6 at its distal end. An image relay means, in this case a fibre image conduit 4A extends axially away from the distal end along the centre of the body 5. An annular light pipe 1 extends proximally from the distal end and surrounds the imaging lenses 6 and fibre image conduits 4A at least along a portion of its length. An illumination fibre bundle 7 consisting of a plurality of optical fibres is coupled to the proximal end of the light pipe 1. The opposite end of the illumination fibre bundle is connected to the light source.

In use, light from the light source is transmitted along the illumination fibre bundle 7 and subsequently along the annular light pipe 1 to be emitted from the distal end of the device as rays 8 to illuminate the image. The image received by the imaging lenses is represented by lines 9. This image is relayed distally along the fibre image conduit so as to be viewed by the eye of an observer or by a camera in the conventional manner.

In principle the annular light pipe 1 as described above can transmit light with extremely high efficiency, since the process of total internal reflection is close to 100% efficient for a smooth or polished surface. Clearly any absorption of light by the material would reduce the efficiency. This can be avoided by choosing a material for which the absorption at the wavelength of intended use is low (e.g. at visible wavelengths fused silica, high transmission optical glass or plastic could be used).

Loss of light may also occur where any material touches or comes into close contact with the internal or external surfaces of the guide. Obviously this must occur to some extent as the pipe 1 has to be supported in some way and furthermore is acting as a support for the image relay means 4, 4A. This loss can however be reduced to negligible level by a number of possible means illustrated in the various embodiments described below.

**Possible embodiments**

**1) Materials:** Suitable high transmission materials for an annular light pipe include fused silica, optical glass, acrylic (poly-methyl-methacrylate). Acrylic or other plastic materials have the advantage of being highly flexible however do not have as high transmission as many types of optical glass or fused silica.

**2) Uncoated capillary material**

The principle is essentially as described above. However in order to reduce light loss where anything touches the pipe a number of possible techniques can be implemented.

a) If all surfaces are clean and free of grease then the pipe will only make contact on its internal or external surfaces at isolated single points. Light will only escape from the guide where surfaces are adjacent to within less than 1 wavelength (=0.5 microns for visible light). This means that the effective contact area will be small as a proportion of the pipe surface area and little light flux will be lost.

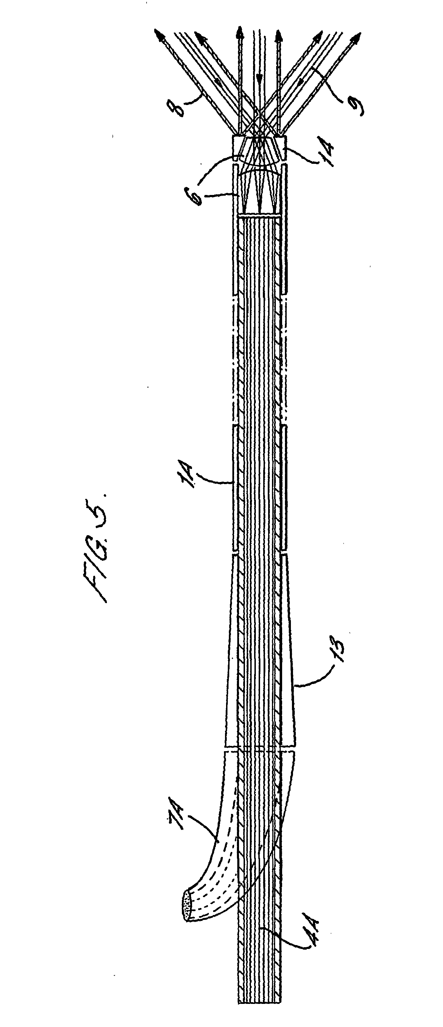

b) The capillary could be protected by means of a material of lower refractive index. Suitable materials might be flouropolymers such as PTFE, Teflon etc. Such materials have a low refractive index ($\approx 1.3$) and will therefore maintain the light-guiding properties of a pipe made of material of higher refractive index all be it at a lower numerical aperture. Figure 4(a) shows one possible arrangement whereby the pipe 1 is spaced from both the image relay means (in this case a fibre image conduit 4A) and the housing 5 by means of a light coating of fine particles 10, e.g. Teflon powder. These contact the pipe 1 only at discrete points and even at those points would substantially preserve the light-guiding properties of the pipe due to the low refractive index of the Teflon. An alternative arrangement is shown in Figure 4(b) whereby a thin Teflon fibre 11 is coiled around the image relay means 4A and a second fibre 12 is coiled around the capillary so as to provide a low refractive index protective barrier.

3) Coated capillary material

Either the inner surface or the outer surface of the pipe itself could consist of a light transmitting material with a thin cladding layer of lower refractive index material on either the external, internal or both surfaces. For such an arrangement it can be shown that the maximum numerical aperture of the pipe is given by:

$$\sin\theta = \sqrt{n_{core}^2 - n_{cladding}^2}$$

. Suitable material combinations, could for example consist of a fused silica capillary (n = 1.46) with a flouropolymer cladding layer (n ≈ 1.3) for which the numerical aperture would be 0.66, or alternatively an acrylic capillary core (n = 1.49) with a flouropolymer cladding would have a numerical aperture of 0.73. These numerical aperture values are similar to, or greater than those of typical glass fibre bundle light guides, and would therefore be entirely adequate for transmitting light coupled directly from such a bundle. Using a glass core material of higher refractive index would result in a still higher numerical aperture.

A further advantageous feature of using a fluoropolymer cladding on a rigid material such as glass or silica is the additional strength and flexibility imparted to the structure. This is due to the prevention of the formation of microcracks in the stressed glass surface which could lead to the breakage of the light guide when placed under stress.

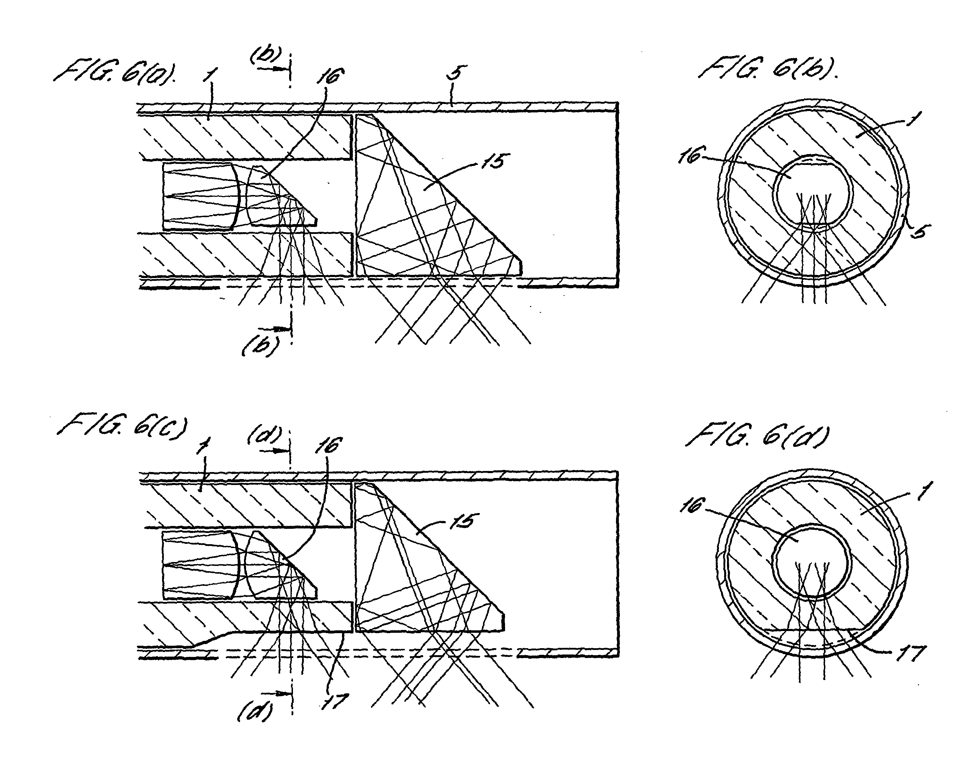

A further example of apparatus in accordance with the present invention is shown in Fig. 5. Most of the features of this example including the image relay means 4A and the imaging lenses 6 are generally the same as described previously. Further, although Fig. 5 does not show a housing 5, this will be present in use.
One difference in this example is that the light pipe 1(a) does not extend as far in the distal or proximal directions as the light pipe 1 of the previous example. Instead, at the proximal end, an outwardly tapering flux concentrator 13 is provided. This has an outer diameter equal to that of the pipe 1A at its distal end, and its outer diameter increases proximally. The fibre bundle 7A can consequently be larger than the fibre bundle 7 used for the example described with reference to Fig. 3.
The fibre optic bundle will emit light over an area defined by the diameter of the flux concentrator and over an angle (or numerical aperture) determined by the combination of construction materials used or the input numerical aperture of the illumination from the light source (whichever is the lesser). Typical values for standard commercially available light guides are: diameter = 4.5mm; numerical aperture = 0.6. The flux concentrator 13 enables light to be coupled from a standard optical fibre light bundle 7A and compressed down to a smaller area to match the size of light pipe 1A. This will couple a greater amount of flux into the pipe 1A than simply coupling from the fibre bundle directly into the pipe 1 as shown in Fig. 3. The flux will however be distributed over a wider angular range. This is a well understood and fundamental limitation of such light concentrators and there is generally, an inverse relationship between the spatial distribution and angular distribution achieved for a given light flux through a conical light concentrator. If the cross sectional areas of the input and output faces of the concentrator are $A_i$ and $A_o$ respectively, the input and output numerical apertures ($NA_i$ and $NA_o$) are related by the equation:

$$A_o \cdot NA_o^2 = A_i \cdot NA_i^2$$

If the maximum numerical aperture of the light pipe is higher than that of the fibre bundle, then this does allow the collection and transportation of light flux from a bundle of larger area than that of the light pipe.
At the distal end the light would be emitted from the light pipe 1 over a correspondingly larger angular distribution. Depending on the field of view this may or may not desirable. However, it is quite feasible to reduce the angular distribution of the emitted light flux. This can be achieved by providing, adjacent to the distal end of the light pipe 1A a tapered light guide which has a constant external diameter equal to that of the light pipe 1A and inner diameter which decreases towards the distal end. As can be seen from Fig. 5, the distal imaging lens is required to have a corresponding tapered shape.

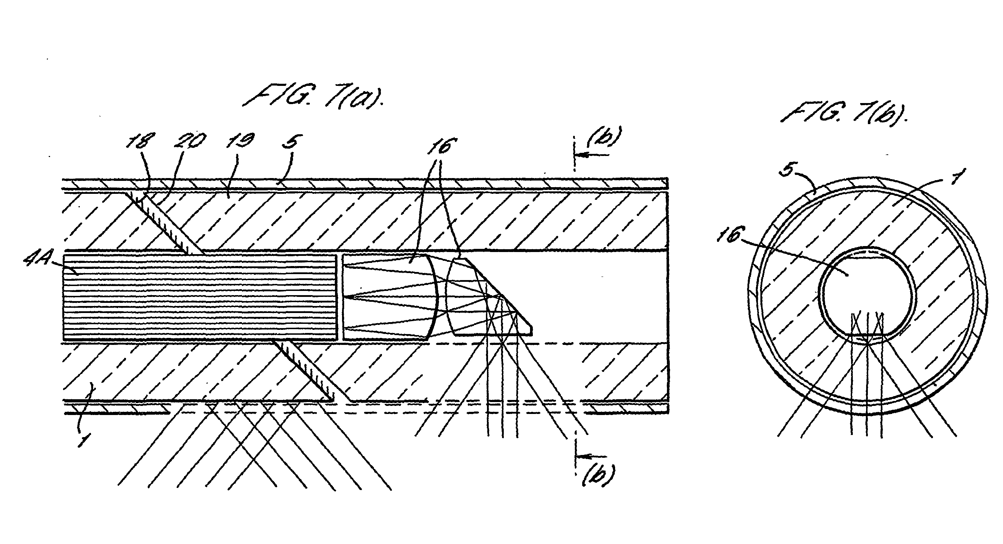

Figures 6(a - d) show two possible distal tip arrangements which would enable the use of an annular light pipe with a lateral viewing (90 degrees direction of view) scope. These arrangements use a 90° prism 15 with a cylindrical profile to couple light out of the capillary and direct the illumination in the 90° viewing direction. The view of the imaging system is achieved by means of a 90° prismatic lens 16. In Figs. 6(a) and (b) this is truncated such that the output transmitting surface and the reflecting surface of the prism are both flat and thus do not contribute any optical aberrations. In this configuration the object is viewed through the side face of the light pipe 1 guide. This will have the effect of viewing the object through a cylindrical shaped window and will introduce a small amount of astigmatic power. Depending on the diameter and thickness of the pipe, and the optical specifications of the instrument this may or may not represent a noticeable amount of astigmatic aberration. If the amount of astigmatism is significant then an alternative means of achieving a lateral direction of view is shown in Figs. 6(c) and (d). In this case a 90° viewing prism with a cylindrical profile to match the internal cylindrical curve of the capillary is used and the view is through a small section of the pipe 1 with a flat area 17 polished on to the outside curve.

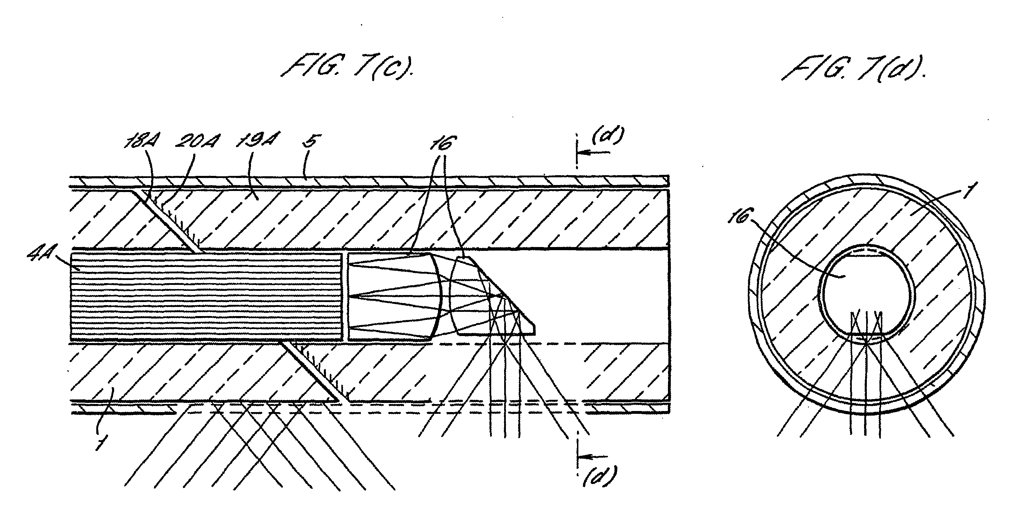

Figs. 7(a)-(d) show two further possible distal tip arrangements which would enable the use of an annular light pipe with a lateral viewing (90° direction of view) scope. These arrangements use the same fibre image conduit 4A as in Fig. 3, and the same 90° prismatic lens 16 of Fig. 6. However, whereas Fig. 6 uses a prism 15 to direct light in the 90° viewing direction, the arrangement of Fig. 7(a) shows the light pipe 1 terminating at an oblique surface 18 at 45° to the main axis. The oblique face 18 is a reflective surface provided by means of a reflective mirror coating on the cut and polished edge of the light guide itself. Positioned distally of the light guide 1 is a support tube 19 having an oblique face 20 which is complementary to the oblique face 18 of the light guide 1. This support tube 19 supports the distal end of the fibre image conduit 4A and the prismatic lens 16.

An alternative arrangement is shown in Figs. 7(c) and 7(d). In this case, the light guide 1 has an oblique face 18A at 45° as before, and a support tube 19A is again provided in the same way that it was in Fig. 7 (a). However, in this case, the oblique face 28 of the support tube 19A is provided with the reflective surface. This support tube 19A should be made of glass, metal or plastic as convenient, with a reflective coating and may or may not be attached to the light guide 1 using optical cement. The use of optical cement has the advantage of reducing the requirement for a smooth, highly polished surface on the cut edge of the light guide 1.

In both of the arrangements shown in Figs. 7 (a)-(d), some of the 90° directed illumination may be obstructed by the image relay means 4A. For example, if this consists of the coherent fibre image guide 4A as shown in Figs. 7(a)-(d), this will usually be protected by a plastic coating. It is possible to remove the coating in the region of the illumination so as to allow the 90° directed illumination to pass through the fibre image conduit 4A unobstructed. Alternatively, if the image relay means is a relay lens system, it may be possible, by careful design of the relay lens system and the prismatic lens 16 to arrange for the 90° directed illumination to pass through an air space between lenses of the image relay means thereby avoiding any obstruction to the illumination.

**Claims**

1. An apparatus for providing an image of a remote object accessible only through an aperture of finite diameter, the apparatus comprising an elongate body defining a main axis (3), an image relay means (4) for relaying an image along the main axis from the distal end of the scope, **characterised in that** it further comprises an annular light pipe (1) surrounding the image relay means (4) for transmitting light to the distal end of the scope to illuminate the object to be viewed; and that at least one of the inner surface or the outer surface of the annular light pipe (1) is surrounded by air.

2. An apparatus according to claim 1, wherein the or each surface surrounded by air is provided with a support which contacts the annular light pipe only at a number of discrete locations.

3. An apparatus according to claim 2, wherein the support material has a lower refractive index than that of the annular light pipe.

4. An apparatus according to claim 2 or claim 3, wherein the support is provided by a powder distributed internally and/or externally to the annular light guide.

5. An apparatus according to claim 2 or claim 3, wherein the support is one or more strips of fibrous material wound internally and/or externally to the annular light pipe.

6. An apparatus according to claim 1, wherein the inner surface or the outer surface of the light pipe is coated with a layer of material having a lower refractive index than the material of the annular light pipe.

7. An apparatus according to any one of the preceding claims, further comprising a frusto-conical light pipe which is coaxial with the annular light pipe and has a central axial bore corresponding to the bore of the annular light pipe, the outer diameter of the frusto-conical light pipe decreasing towards the annular light pipe and being substantially equal to the outer diameter of the annular light pipe at the interface between the annular light pipe and the frusto-conical light pipe.

8. An apparatus according to any one of the preceding claims, further comprising a distal light guide adjacent to the distal end of the annular light pipe and having an outer diameter equal to the outer diameter of the annular light pipe, and an inner diameter which at its proximal end is equal to the inner diameter of the annular light pipe and which progressively decreases towards the distal end.

9. An apparatus according to any one of the preceding claims arranged such that light is emitted and the images are received in a direction substantially 90° to the viewing direction, in which the annular light pipe is provided with a window through which the image is transmitted to the image relay means.

10. An apparatus according to claim 9, wherein the external surface of the annular light pipe at the window is polished flat.

11. An apparatus according to claim 9 or claim 10, wherein the light guide terminates at a face which is at substantially 45° to the main axis and is provided with a reflective coating.

**Patentansprüche**

1. Vorrichtung zum Vorsehen eines Bildes eines entfernten, nur durch eine Öffnung mit endlichem Durchmesser zugänglichen Objektes, wobei die Vorrichtung einen länglichen Körper umfasst, welcher eine Hauptachse (3) und ein Bildübertragungsmittel (4) zur Übertragung eines Bildes entlang der Hauptachse von dem distalen Ende des Sichtinstruments definiert, **dadurch gekennzeichnet, dass** sie ferner eine ringförmige Lichtleitung (1) umfasst, welche das Bildübertragungsmittel (4) umgibt, um zum Beleuchten des zu betrachtenden Objekts Licht zu dem distalen Ende des Sichtinstruments zu übertragen; und dass wenigstens eine der inneren oder der äußeren Fläche der ringförmigen Lichtleitung (1) von Luft umgeben ist.

2. Vorrichtung nach Anspruch 1, wobei die oder jede von Luft umgebene Fläche mit einer Stütze versehen ist, welche die ringförmige Lichtleitung nur an einer Anzahl einzelner Stellen berührt.

3. Vorrichtung nach Anspruch 2, wobei das Material der Stütze einen geringeren Brechungsindex aufweist als dasjenige der ringförmigen Lichtleitung.

4. Vorrichtung nach Anspruch 2 oder Anspruch 3, wobei die Stütze durch ein innerhalb und/oder außerhalb der ringförmigen Lichtleitung verteiltes Pulver vorgesehen ist.

5. Vorrichtung nach Anspruch 2 oder Anspruch 3, wobei die Stütze einen oder mehrere Streifen eines innerhalb und/oder außerhalb der ringförmigen Lichtleitung gewundenen faserigen Materials umfasst.

6. Vorrichtung nach Anspruch 1, wobei die innere Fläche oder die äußere Fläche der Lichtleitung mit einer Schicht eines Materials beschichtet ist, welches einen geringeren Brechungsindex aufweist als das Material der ringförmigen Lichtleitung.

7. Vorrichtung nach einem der vorangehenden Ansprüche, welche ferner eine kegelstumpfförmige Lichtleitung umfasst, welche zu der ringförmigen Lichtleitung koaxial ist und eine zentrale Achsenbohrung aufweist, welche der Bohrung der ringförmigen Lichtleitung entspricht, wobei der äußere Durchmesser der kegelstumpfförmigen Lichtleitung zu der ringförmigen Lichtleitung hin abnimmt und im Wesentlichen dem äußeren Durchmesser der ringförmigen Lichtleitung an der Schnittstelle zwischen der ringförmigen Lichtleitung und der kegelstumpfförmigen Lichtleitung entspricht.

8. Vorrichtung nach einem der vorangehenden Ansprüche, welche ferner einen an das distale Ende der ringförmigen Lichtleitung angrenzenden Lichtleiter umfasst und der einen äußeren Durchmesser aufweist, welcher dem äußeren Durchmesser der ringförmigen Lichtleitung entspricht, und einen inneren Durchmesser aufweist, welcher an seinem proximalen Ende dem inneren Durchmesser der ringförmigen Lichtleitung entspricht und welcher zu dem distalen Ende hin immer mehr abnimmt.

9. Vorrichtung nach einem der vorangehenden Ansprüche, derart angeordnet, dass Licht emittiert wird und die Bilder in einer Richtung empfangen werden, welche im Wesentlichen um 90° zur Sichtrichtung liegt, in welcher die ringförmige Lichtleitung mit einem Fenster versehen ist, durch welches das Bild zum Bildübertragungsmittel übertragen wird.

10. Vorrichtung nach Anspruch 9, wobei die externe Fläche der ringförmigen Lichtleitung an dem Fenster flach poliert ist.

11. Vorrichtung nach Anspruch 9 oder Anspruch 10, wobei der Lichtleiter an einer Seite endet, welche im Wesentlichen um 45° zur Hauptachse steht und mit einer reflektierenden Beschichtung versehen ist.

**Revendications**

1. Appareil pour obtenir une image d'un objet éloigné accessible uniquement par une ouverture de diamètre fini, l'appareil comprenant un corps allongé définissant un axe principal (3), un moyen de relais d'image (4) pour relayer une image le long de l'axe principal depuis l'extrémité distale du scope, **caractérisé en ce qu'**il comprend également un conduit de lumière annulaire (1) entourant le moyen de relais d'image (4) pour transmettre la lumière jusqu'à l'extrémité distale du scope afin d'éclairer l'objet à examiner ; et **en ce qu'**au moins la surface interne ou la surface externe du conduit de lumière annulaire (1) est entourée d'air.

2. Appareil selon la revendication 1, dans lequel la surface ou chaque surface entourée d'air est dotée d'un support qui contacte le conduit de lumière annulaire uniquement en un nombre d'emplacements discrets.

3. Appareil selon la revendication 2, dans lequel le matériau de support a un indice de réfraction inférieur à celui du conduit de lumière annulaire.

4. Appareil selon la revendication 2 ou la revendication 3, dans lequel le support est constitué par une poudre répartie intérieurement et/ou extérieurement au guide de lumière annulaire.

5. Appareil selon la revendication 2 ou la revendication 3, dans lequel le support est constitué par une ou plusieurs bandes de matériau fibreux enroulées intérieurement et/ou extérieurement au conduit de lumière annulaire.

6. Appareil selon la revendication 1, dans lequel la surface interne ou la surface externe du conduit de lumière est revêtue d'une couche de matériau ayant un indice de réfraction inférieur à celui du matériau du conduit de lumière annulaire.

7. Appareil selon l'une quelconque des revendications précédentes, comprenant également un conduit de lumière tronconique qui est coaxial au conduit de lumière annulaire et a un alésage axial central correspondant à l'alésage du conduit de lumière annulaire, le diamètre extérieur du conduit de lumière tronconique diminuant vers le conduit de lumière annulaire et étant sensiblement égal au diamètre extérieur du conduit de lumière annulaire à l'interface entre le conduit de lumière annulaire et le conduit de lumière tronconique.

8. Appareil selon l'une quelconque des revendications précédentes, comprenant également un guide de lumière distal adjacent à l'extrémité distale du conduit de lumière annulaire et ayant un diamètre extérieur égal au diamètre extérieur du conduit de lumière annulaire, et un diamètre intérieur qui, à son extrémité proximale, est égal au diamètre intérieur du conduit de lumière annulaire et qui diminue progressivement vers l'extrémité distale.

9. Appareil selon l'une quelconque des revendications précédentes agencé de telle sorte que la lumière est émise et les images sont reçues dans une direction sensiblement à 90° par rapport à la direction de vision, dans lequel le conduit de lumière annulaire est pourvu d'une fenêtre par laquelle l'image est transmise au moyen de relais d'image.

10. Appareil selon la revendication 9, dans lequel la surface externe du conduit de lumière annulaire à la fenêtre est polie pour être plate.

11. Appareil selon la revendication 9 ou la revendication 10, dans lequel le guide de lumière se termine à une face qui est sensiblement à 45° par rapport à l'axe principal et est doté d'un revêtement réfléchissant.

FIG. 1(b).

FIG. 1(a).

FIG. 2(a).

FIG. 2(b).

FIG. 3.

EP 1 356 335 B1

FIG. 4(a).

FIG. 4(b).

FIG. 5.

FIG. 6(b).

FIG. 6(d)

FIG. 6(a).

FIG. 6(c)

FIG. 7(b).

FIG. 7(a).

FIG. 7(d).

FIG. 7(c).